# EUROPÄISCHE PATENTSCHRIFT

(11) **EP 3 970 468 B1**
(45) Veröffentlichungstag und Bekanntmachung des Hinweises auf die Patenterteilung: **07.02.2024**
(21) Anmeldenummer: 21185044.1
(22) Anmeldetag: 12.07.2021
(51) Int. Cl.: A01C 23/00, B60P 3/22, B60P 3/24

(54) **ANHÄNGER ZUR BEFÖRDERUNG VON FLÜSSIGKEITEN**
TRAILER FOR TRANSPORTING LIQUIDS
REMORQUE DESTINÉE AU TRANSPORT DE LIQUIDES

(30) Priorität: 21.09.2020 DE 102020124504
(43) Veröffentlichungstag der Anmeldung: 23.03.2022
(73) Patentinhaber: Röhren- und Pumpenwerk Bauer Ges.m.b.H., 8570 Voitsberg (AT)
(72) Erfinder: ROISS, Otto, 8010 Graz (AT)
(74) Vertreter: Hoefer & Partner Patentanwälte mbB

(56) Entgegenhaltungen:
- DE-A1- 19 851 613
- FR-A1- 2 759 681
- US-A1- 2009 223 975

## Beschreibung

Vorliegende Erfindung betrifft einen Anhänger zur Beförderung von Flüssigkeiten. Der Anhänger wird zum Befördern und Ausbringen von Wirtschaftsdünger und Klärschlamm verwendet.

Aus dem Stand der Technik sind unterschiedliche Anhänger zur Beförderung von Flüssigkeiten bekannt. Hier werden insbesondere Anhänger zur Beförderung von Wirtschaftsdünger, beispielsweise Gülle, oder Klärschlamm betrachtet. Insbesondere wird der Anhänger zum Ausbringen der Flüssigkeit auf ein Feld verwendet.

US 2009/223975 A1 zeigt einen Tank zur Aufnahme von Flüssigkeit, der auf den Rahmen eines Fahrzeugs montierbar ist. In dem Tank sind dabei mehrere Trennwände mit Durchgangsöffnungen vorgesehen.

FR 2 759 681 A1 offenbart einen Anhänger mit einem Tank für eine Flüssigkeit zum Aufbringen auf einem Feld. In dem Tank ist eine querliegende Abtrennung angeordnet, die sich vor der Achse des Anhängers befindet. Die Abtrennung weist eine Klappe auf, die in eine offene und eine geschlossene Stellung schwenkbar ist.

Es ist Aufgabe der Erfindung, einen Anhänger zur Beförderung von Flüssigkeiten anzugeben, der eine sichere Beförderung, insbesondere auch Ausbringung, der Flüssigkeit ermöglicht.

Die Lösung dieser Aufgabe erfolgt durch die Merkmale der unabhängigen Ansprüche. Die abhängigen Ansprüche haben vorteilhafte Ausgestaltungen der Erfindung zum Gegenstand.

Die Erfindung zeigt einen Anhänger zur Beförderung und Ausbringung von Flüssigkeiten, nämlich Wirtschaftsdünger oder Klärschlamm.

Der Anhänger umfasst einen Tank. Der Tank weist eine vordere Stirnwand und eine hintere Stirnwand auf. Die beiden Stirnwände sind über eine Mantelfläche miteinander verbunden. Eine Längsachse des Anhängers, die insbesondere parallel zur Fahrtrichtung steht, erstreckt sich durch die beiden Stirnwände. Insbesondere ist vorgesehen, dass der Tank aus Stahl gefertigt ist. Alternativ kann der Tank auch aus Kunststoff, insbesondere faserverstärktem Kunststoff, gefertigt sein.

Vorzugsweise weist der Anhänger ein Fahrgestell auf. Des Weiteren ist vorzugsweise eine Anhängevorrichtung, insbesondere ein Zuggabel, vorgesehen. Über diese Anhängevorrichtung kann der Anhänger an einer Zugmaschine, insbesondere einem Traktor, befestigt werden. Des Weiteren ist erfindungsgemäß vorgesehen, dass der Anhänger eine

Vorrichtung zum Ausbringen der Flüssigkeit auf ein Feld aufweist; insbesondere mit einer Pumpe und einem Auslass im Bereich der hinteren Stirnseite.

Erfindungsgemäß weist der Tank eine im Tank angeordnete Trennwand auf. Diese Trennwand erstreckt sich vorzugsweise im Wesentlichen parallel zu den beiden Stirnwänden. Die Trennwand unterteilt den Tank in ein vorderes Tankvolumen und ein hinteres Tankvolumen. Das vordere Tankvolumen ist vorzugsweise kleiner als das hintere Tankvolumen.

Zusätzlich zu der hier beschriebenen und genauer definierten Trennwand können auch weitere Trennwände oder Schwallwände sowohl im vorderen als auch im hinteren Tankvolumen vorgesehen sein.

Die Trennwand zur Unterteilung des Tanks in das vordere und hintere Tankvolumen weist zumindest eine Durchflussöffnung auf. Im nichtverschlossenen Zustand ermöglicht die Durchflussöffnung einen freien Austausch der Flüssigkeit zwischen den beiden Tankvolumen.

Im Folgenden wird meist eine Durchflussöffnung im Detail beschrieben. Dabei ist aber stets vorgesehen, dass in der Trennwand mehrere der Durchflussöffnungen ausgebildet sind.

Am Umfang der zumindest einen Durchflussöffnung befindet sich erfindungsgemäß eine

Befestigungsanordnung. Diese Befestigungsanordnung ist zum nachrüstbaren Befestigen eines Deckels ausgebildet. Der Deckel wiederum kann die Durchflussöffnung verschließen. Dabei kann der Deckel die Durchflussöffnung vollständig oder zumindest annähernd vollständig verschließen. Entscheidend ist nicht ein vollständig dichtes Abschließen der Durchflussöffnung, sondern ein Trennen der beiden Tankvolumen.

Durch die beiden getrennten Tankvolumen, nachdem der Deckel an der Durchflussöffnung nachgerüstet wurde, kann beim Entleeren des Tanks, insbesondere beim Ausbringen der Flüssigkeit auf ein Feld, stets zuerst das hintere Tankvolumen entleert werden und im Anschluss erst das vordere Tankvolumen. Dadurch wird sichergestellt, dass im vorderen Bereich des Anhängers ein ausreichendes Gewicht durch die Flüssigkeit im vorderen Tankvolumen zur Erhöhung der Stützlast bereitgestellt wird. Die erhöhte Stützlast ist insbesondere bei Verwendung des Anhängers auf Feldern in Hanglage wichtig, da beispielsweise beim Bergauffahren sich die Flüssigkeit im Tank trotz Schwallwänden nach hinten bewegt und somit ohne einer Abtrennung der beiden Tankvolumen die Stützlast zu gering wird.

Wie beschrieben, ist vorgesehen, dass der Deckel zum Verschließen der Durchflussöffnung nachrüstbar ist. Diese Nachrüstbarkeit berücksichtigt, dass solch ein Anhänger im Laufe seines Produktlebens auf unterschiedlichen Feldern und/oder von unterschiedlichen Benutzern verwendet wird. Dadurch kann es im Laufe des Produktlebens zu einer Anwendung des Anhängers kommen, bei der die erhöhte Stützlast durch Abtrennen des vorderen Tankvolumens erstrebenswert ist. Durch die hier vorgesehene Befestigungsanordnung an der Durchflussöffnung ist jederzeit ein einfaches Nachrüsten des Deckels und somit Verschließen der Durchflussöffnung gewährleistet.

Bevorzugt ist vorgesehen, dass die Befestigungsanordnung am Umfang der Durchflussöffnung verteilte Schraubenlöcher umfasst. Vorzugsweise weisen die Schraubenlöcher einen unrunden Querschnitt zur verdrehsicheren Aufnahme von Schrauben auf. Alternativ weisen die Schraubenlöcher vorzugsweise ein Innengewinde oder eine aufgeschweißte Mutter auf. Zum Befestigen des Deckels an der Durchflussöffnung bzw. an der Befestigungsanordnung können entsprechende Bolzen bzw. Schrauben in die Schraubenlöcher der Befestigungsanordnung eingesetzt werden.

Zusätzlich oder alternativ ist es möglich, dass die Befestigungsanordnung mehrere, am Umfang der Durchflussöffnung verteilte Gewindebolzen umfasst. Entsprechend wird der Deckel auf die Gewindebolzen aufgeschoben und mit Muttern gesichert.

Bevorzugt ist vorgesehen, dass die einzelne Durchflussöffnung eine Größe von zumindest 3%, vorzugsweise zumindest 5%, besonders vorzugsweise zumindest 10%, der Tankquerschnittsfläche aufweist. Ausschlaggebend ist hier die Tankquerschnittsfläche im Bereich der Trennwand. Durch die entsprechend große Ausgestaltung der einzelnen Durchflussöffnung ist sichergestellt, dass es ohne dem Deckel bzw. den mehreren Deckeln einen freien Austausch der Flüssigkeit zwischen den Tankvolumen ohne etwaiger Verstopfung der Durchflussöffnung gibt.

Die Obergrenze für die Größe der Durchflussöffnung liegt vorzugsweise bei 80% der Tankquerschnittsfläche. Werden mehrere Durchflussöffnungen in der Trennwand verwendet, beträgt die Summe der Flächen aller Durchflussöffnungen vorzugsweise höchstens 80 % der Tankquerschnittsfläche.

Insbesondere ist vorgesehen, dass sich die Größe der einzelnen Durchflussöffnung an der Größe des Mannloches im Tank orientiert: Der Tank weist bevorzugt ein Mannloch zum Einsteigen in den Tank auf. Dieses Mannloch befindet sich vorzugsweise an der Oberseite der Mantelfläche des Tanks. Die Größe der einzelnen Durchflussöffnung und die Größe des Mannloches sind derart aneinander angepasst, so dass der einteilige Deckel zum Verschließen der gesamten Durchflussöffnung durch das Mannloch passt. Der dabei zu berücksichtigende Deckel ist insbesondere einteilig und insbesondere als steife Platte ausgebildet. Bei Verwendung mehrerer Durchflussöffnungen ist für die Größe des Mannloches die größte Durchflussöffnung in der Trennwand ausschlaggebend.

Bevorzugt ist vorgesehen, dass zumindest eine Durchflussöffnung in der unteren Hälfte der Trennwand angeordnet ist. Zusätzlich oder alternativ ist zumindest eine Durchflussöffnung in der oberen Hälfte der Trennwand angeordnet.

Des Weiteren ist bevorzugt vorgesehen, dass sowohl im vorderen als auch im hinteren Tankvolumen jeweils zumindest eine Flüssigkeitsentnahmeöffnung vorgesehen ist. Die jeweilige Flüssigkeitsentnahmeöffnung dient zum selektiven Entnehmen der Flüssigkeit aus dem jeweiligen Tankvolumen. Die Flüssigkeitsentnahmeöffnung befindet sich beispielsweise an einer der beiden Stirnseiten oder im unteren Bereich der Mantelfläche. Durch die zumindest zwei Flüssigkeitsentnahmeöffnungen und durch deren Verbindung mit der Pumpe des Anhängers kann zunächst das hintere Tankvolumen entleert werden, wobei das vordere Tankvolumen gefüllt bleibt und somit die Stützlast aufrechterhält.

Des Weiteren ist bevorzugt folgende Ausgestaltung des Anhängers vorgesehen:
Der Anhänger umfasst vorzugsweise eine Zuggabelaufnahme, die am Tank angeordnet ist, und eine an der Zuggabelaufnahme in unterschiedlichen Höhen befestigbare Zuggabel. Die Zuggabel ist zur Verbindung mit einer Zugmaschine, insbesondere einem Traktor, ausgebildet. Die Zuggabelaufnahme kann direkt am Tank, also beispielsweise an der Stirnwand und/oder Mantelfläche, befestigt sein. Alternativ oder zusätzlich kann die Zuggabelaufnahme auch indirekt am Tank befestigt sein: Der Tank kann beispielsweise auf einem oder mehreren Längsträgern aufliegen, wobei die Zuggabelaufnahme an dem zumindest einen Längsträger befestigt ist.

Die Zuggabelaufnahme umfasst vorzugsweise mehrere Lochreihenanordnungen. Jede Lochreihenanordnung weist mehrere übereinander angeordnete Löcher zum Befestigen der Zuggabel in unterschiedlichen Höhen auf. Insbesondere weist die einzelne Lochreihenanordnung zwei, drei, vier, fünf oder sechs übereinander angeordnete Löcher auf. Die Löcher dienen insbesondere zum Durchstecken von Bolzen, um so die Zuggabel an der Zuggabelaufnahme zu befestigen.

Insbesondere weist die Zuggabel zwei "Zinken" auf, die jeweils über eine Lochreihenanordnung an der Zuggabelaufnahme befestigt sind und die in Fahrtrichtung nach vorne zusammenlaufen und mit einem Zugauge oder einer Kugelkupplung ausgestattet sind.

Die einzelne Lochreihenanordnung der Zuggabelaufnahme ist vorzugsweise durch zwei parallele beabstandete Stahlbleche gebildet, wobei in jedem Blech die mehreren übereinander angeordneten Löcher ausgebildet sind.

Besonders bevorzugt ist die Zuggabel über schräggestellte Druckmittelzylinder, insbesondere Hydraulikzylinder, mit der Zuggabelaufnahme verbunden. Dementsprechend umfasst die Zuggabelaufnahme eine linke untere Lochreihenanordnung und eine rechte untere Lochreihenanordnung zum direkten Befestigen der Gabel an der Zuggabelaufnahme. Die Befestigung der Zuggabel über entsprechende Bolzen in den beiden unteren Lochreihenanordnungen fluchtet, so dass die Zuggabel um eine Querachse drehbar ist. Des Weiteren umfasst die Zuggabelaufnahme eine linke obere Lochreihenanordnung und eine rechte obere Lochreihenanordnung zum jeweiligen Befestigen des Druckmittelzylinders. Das obere Ende des jeweiligen Druckmittelzylinders ist in der zugehörigen oberen Lochreihenanordnung höhenverstellbar befestigt. Das untere Ende des jeweiligen Druckmittelzylinders ist an der Zuggabel befestigt.

Des Weiteren ist bevorzugt vorgesehen, dass der Anhänger zumindest eine Multileistenanordnung umfasst. Die einzelne Multileistenanordnung erstreckt sich parallel zur Längsachse des Anhängers seitlich an der Mantelfläche des Tanks. Die Multileistenanordnung erstreckt sich dabei über eine hier als "Anordnungslänge" bezeichnete Länge.

Die Multileistenanordnung ist zum Befestigen, insbesondere Anschrauben, von Anbauteilen ausgebildet. Diese Anbauteile dienen beispielsweise zum Befestigen eingeklappter Arme einer Schleppvorrichtung.

Die Anordnungslänge erstreckt sich über zumindest 50%, vorzugsweise zumindest 75% der Länge des Tanks. Die Länge des Tanks ist insbesondere durch die beiden Stirnwände definiert. Der Vorteil dieser sehr langen Multileistenanordnung ist, dass diese eine sehr flexible Positionierung von Anbauteilen ermöglicht. Bei der Fertigung des Anhängers muss aufgrund der sehr langen Multileistenanordnung nicht mehr berücksichtigt werden, welche Anbauteile und an welcher Position die Anbauteile anzubringen sind. Vielmehr kann ohne der Berücksichtigung vieler Varianten, jeder Anhänger mit der standardmäßig sehr langen Multileistenanordnung produziert werden.

Insbesondere ist vorgesehen, dass auf beiden Seiten des Tanks zumindest eine Multileistenanordnung verwendet wird. Besonders bevorzugt befinden sich auf beiden Seiten des Tanks jeweils zumindest zwei parallel angeordnete und beabstandete Multileistenanordnungen.

Die einzelne Multileistenanordnung umfasst bevorzugt mehrere fluchtende Leisten, die beabstandet zueinander angeordnet sind. Dabei entspricht die Summe der Länge der Leisten der "Anordnungslänge" der gesamten Multileistenanordnung. Insbesondere kann eine Multileistenanordnung entlang der Länge des Tanks zwei bis 30 einzelne Leisten umfassen. Durch Verteilen der Leisten über die gesamte Länge des Tanks ist eine sehr flexible Anordnung der Anbauteile an unterschiedlichsten Positionen möglich.

Die einzelne Multileistenanordnung erstreckt sich vorzugsweise über maximal 10 cm horizontal von der Mantelfläche weg. Diese Breite von bis zu 10 cm reicht aus, um insbesondere mit entsprechenden Durchgangsöffnungen in der Leiste die Anbauteile zu befestigen.

Die Erfindung umfasst ferner einen Nachrüstsatz für den vorab beschriebenen Anhänger. Der Nachrüstsatz umfasst einen Deckel, ausgebildet zum Befestigen an der beschriebenen Befestigungsanordnung zum Verschließen der Durchflussöffnung. Bei Verwendung mehrerer Durchflussöffnungen umfasst der Nachrüstsatz vorzugsweise entsprechend mehrere Deckel. Der einzelne Deckel bzw. die mehreren Deckel des Nachrüstsatzes sind in ihrer Größe an die dazugehörige Durchflussöffnung angepasst.

Des Weiteren umfasst die Erfindung eine Anordnung mit dem beschriebenen Anhänger und dem zumindest einen Deckel, ausgebildet zum Befestigen an der Befestigungsanordnung zum Verschließen der Durchflussöffnung. Bei Verwendung mehrerer Durchflussöffnungen umfasst die Anordnung entsprechend mehrere Deckel.

Des Weiteren umfasst die Erfindung ein Verfahren zum Nachrüsten des beschriebenen Anhängers mit den folgenden Schritten: Einbringen zumindest eines Deckels, insbesondere durch ein Mannloch, in dem Tank und Befestigen des Deckels an der Befestigungsanordnung zum Verschließen der Durchflussöffnung.

Die zum Anhänger beschriebenen vorteilhaften Ausgestaltungen und Unteransprüche finden entsprechend vorteilhafte Anwendung für den Nachrüstsatz, die Anordnung und das Verfahren.

Weitere Einzelheiten, Vorteile und Merkmale der vorliegenden Erfindung ergeben sich aus nachfolgender Beschreibung eines Ausführungsbeispiels anhand der Zeichnungen. Es zeigen:

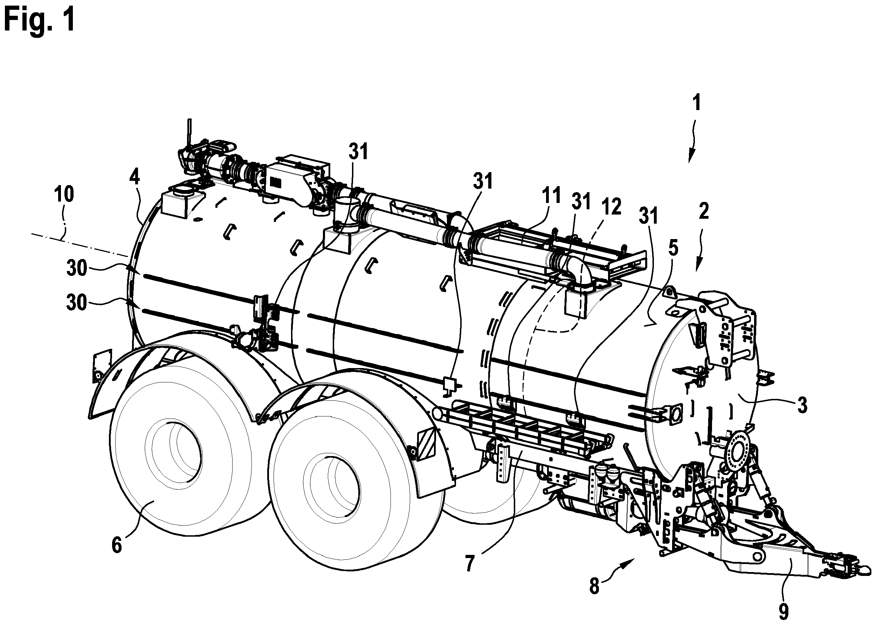

- Fig. 1: eine perspektivische Ansicht eines erfindungsgemäßen Anhängers gemäß einem Ausführungsbeispiel,
- Fig. 2: eine Detailansicht des erfindungsgemäßen Anhängers gemäß dem Ausführungsbeispiel,
- Fig. 3: eine schematische Ansicht der Trennwand in dem Tank des erfindungsgemäßen Anhängers gemäß dem Ausführungsbeispiel mit Deckeln zum Verschließen der Durchflussöffnungen,
- Fig. 4: eine Zuggabelaufnahme des erfindungsgemäßen Anhängers gemäß dem Ausführungsbeispiel,
- Fig. 5: die Zuggabelaufnahme mit Zuggabel des erfindungsgemäßen Anhängers gemäß dem Ausführungsbeispiel, und
- Fig. 6 und 7: ein Detail des erfindungsgemäßen Anhängers mit Multileisten gemäß dem Ausführungsbeispiel.

Im Folgenden wir ein Anhänger 1 zum Ausbringen von Flüssigkeit auf ein Feld im Detail beschrieben. Soweit nichts anderes erwähnt ist, wird dabei stets auf alle Figuren Bezug genommen.

Der Anhänger 1 umfasst einen Tank 2 aus Stahl mit einer vorderen Stirnwand 3 und einer hinteren Stirnwand 4, die über eine Mantelfläche 5 miteinander verbunden sind. Eine Längsachse 10 erstreckt sich parallel zur Fahrtrichtung durch die beiden Stirnwände 3, 4.

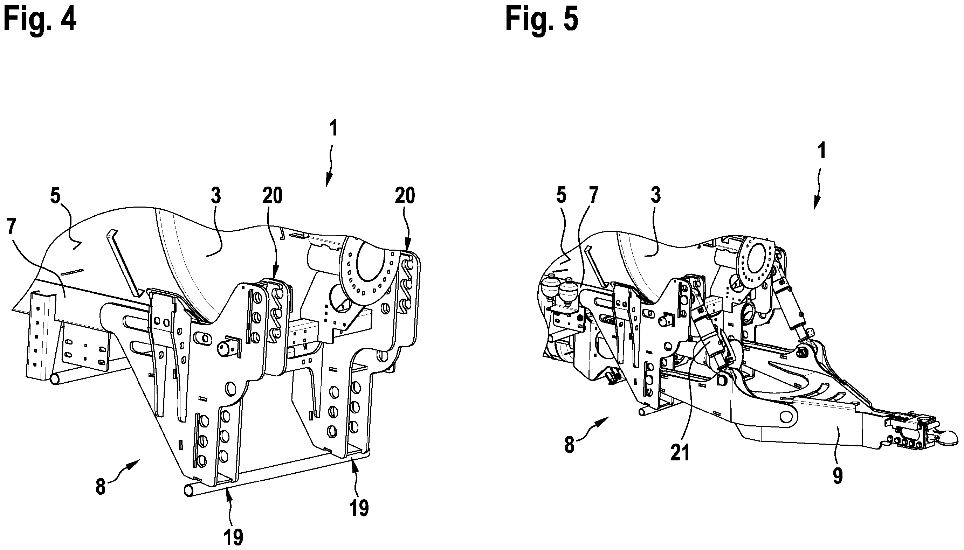

Der Tank 2 ist von einem Fahrwerk 6 getragen. Beispielsweise Fig. 4 verdeutlicht, dass unter dem Tank 2 zwei Längsträger 7 zur Aufnahme des Tanks 2 vorgesehen sind.

An der vorderen Seite des Anhängers 1 befindet sich eine Zuggabelaufnahme 8 mit einer daran höhenverstellbar angeordneten Zuggabel 9. Die Zuggabel 9 weist zwei "Zinken" auf, die nach vorne zusammenlaufen. Am vorderen Ende der Zuggabel 9 ist eine Kugelkupplung angeordnet.

An der Oberseite des Tanks 2 befindet sich ein Mannloch 11, über das in das Innere des Tanks 2 eingestiegen werden kann.

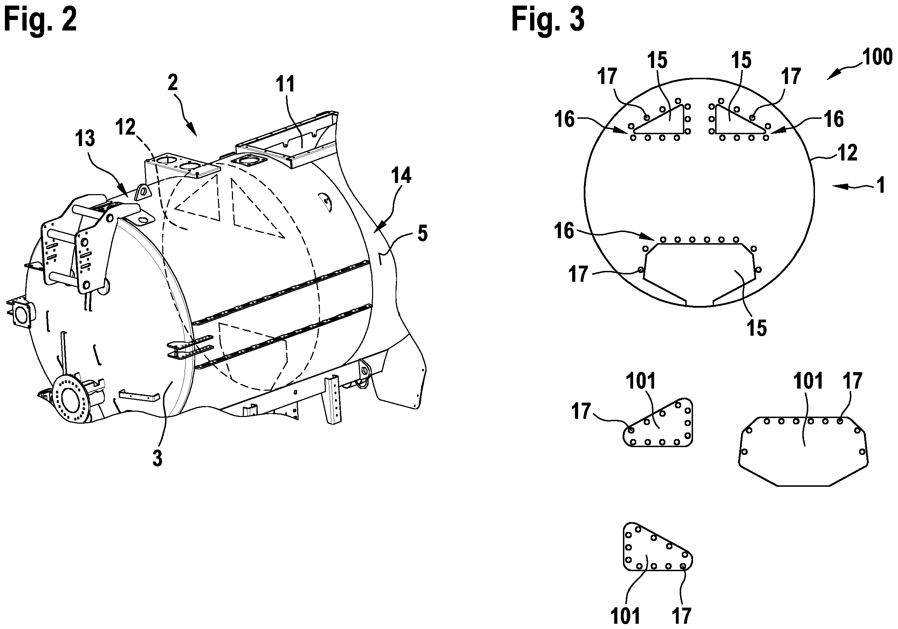

Fig. 2 verdeutlicht, dass im Inneren des Tanks 2 eine Trennwand 12 angeordnet ist. Die Trennwand 12 unterteilt den Tank 2 in ein vorderes Tankvolumen 13 und ein hinteres Tankvolumen 14. Das vordere Tankvolumen 13 ist kleiner als das hintere Tankvolumen 14.

Fig. 3 zeigt im Detail die Trennwand 12 mit drei Durchflussöffnungen 15. Gezeigt sind zwei Durchflussöffnungen 15 in der oberen Hälfte der Trennwand 12 und eine Durchflussöffnung in der unteren Hälfte der Trennwand 12.

Am Umfang der jeweiligen Durchflussöffnung 15 ist eine Befestigungsanordnung 16 ausgebildet. Die Befestigungsanordnung 16 weist mehrere Schraubenlöcher 17 auf.

Fig. 3 zeigt eine Anordnung 100, die den Tank 1 und die zugehörigen Deckel 101 zum Nachrüsten umfasst. Diese Deckel 101 passen jeweils zu einer der Durchflussöffnungen 15. Auch die Deckel 101 weisen am Umfang entsprechende Schraubenlöcher auf, so dass die Deckel 101 mit der zugehörigen Befestigungsanordnung 16 verschraubt werden können.

Die Deckel 101 sind in ihrer Größe derart ausgebildet, dass sie vollständig durch das Mannloch 11 in das Innere des Tanks 2 eingeführt werden können.

Fig. 4 und 5 zeigen, dass die Zuggabelaufnahme 8 zwei untere Lochreihenanordnungen 19 und zwei obere Lochreihenanordnungen 20 umfasst. Die Lochreihenanordnungen 19, 20 sind durch parallele beabstandete Stahlbleche gebildet. Jede Lochreihenanordnung 19, 20 umfasst mehrere, im gezeigten Beispiel drei, senkrecht übereinander angeordnete Löcher.

An den beiden unteren Lochreihenanordnungen 19 wird die Zuggabel 9 gemäß Fig. 5 mit Bolzen drehbeweglich befestigt. Die beiden oberen Lochreihenanordnungen 20 dienen zur höhenverstellbaren Halterung von Druckmittelzylindern 21. Die unteren Enden der Druckmittelzylinder 21 sind drehbeweglich mit der Zuggabel 9 verbunden; s. Fig. 5.

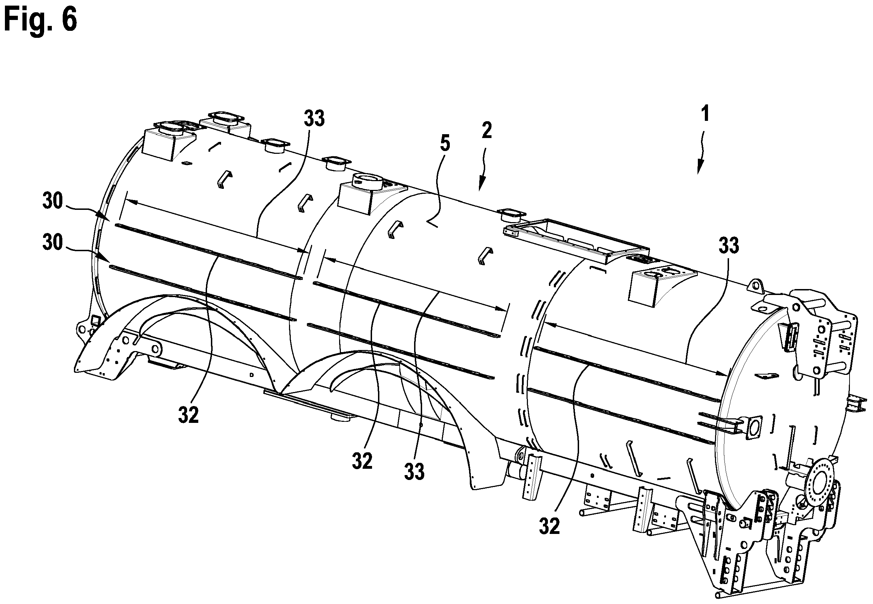

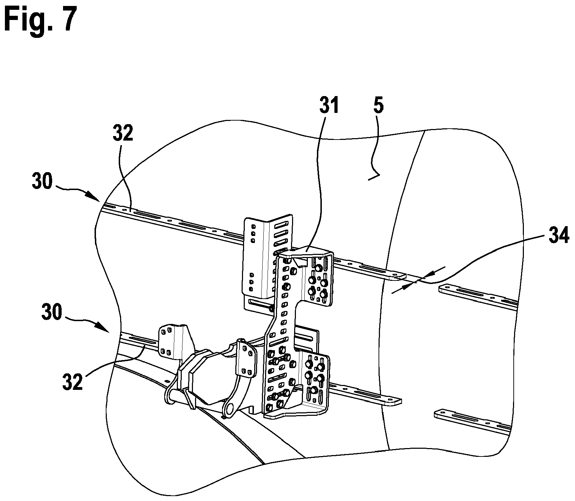

Fig. 6 und 7 zeigen eine Seite des Tanks 2 mit zwei Multileistenanordnungen 30. Auch an der gegenüberliegenden, nicht gezeigten Seite des Tanks 2 sind zwei dieser Multileistenordnungen 30 angeordnet.

Die Multileistenanordnungen 30 erstrecken sich jeweils parallel zur Längsachse 10 und befinden sich seitlich an der Mantelfläche 5 des Tanks 2. Fig. 7 verdeutlicht, dass an den Multileistenanordnungen 30 Anbauteile 31 an beliebiger Position befestigt werden können.

Die einzelne Multileistenanordnung 30 weist im gezeigten Beispiel drei fluchtende Leisten 32 auf. Jede Leiste 32 erstreckt sich über eine Leistenlänge 33. Die Summe der drei Leistenlängen 33 ergibt die im allgemeinen Teil der Beschreibung erwähnte "Anordnungslänge" der Multileistenanordnung 30.

Die einzelne Multileistenanordnung 30 bzw. die einzelne Leiste 32 erstreckt sich horizontal und senkrecht zur Längsachse 10 mit einer Leistenbreite 34. Entlang der Länge sind in den Leisten 32 diverse Durchgangsöffnungen ausgebildet, durch die Schrauben zum Befestigen der Anbauteile 31 gesetzt werden können.

### Bezugszeichenliste

- 1: Anhänger
- 2: Tank
- 3: vordere Stirnwand
- 4: hintere Stirnwand
- 5: Mantelfläche
- 6: Fahrwerk
- 7: Längsträger
- 8: Zuggabelaufnahme
- 9: Zuggabel
- 10: Längsachse
- 11: Mannloch
- 12: Trennwand
- 13: vorderes Tankvolumen
- 14: hinteres Tankvolumen
- 15: Durchflussöffnung
- 16: Befestigungsanordnung
- 17: Schraubenlöcher
- 19: untere Lochreihenanordnung
- 20: obere Lochreihenanordnung
- 21: Druckmittelzylinder
- 30: Multileistenanordnung
- 31: Anbauteil
- 32: Leiste
- 33: Leistenlänge
- 34: Leistenbreite
- 100: Anordnung
- 101: Deckel

## Patentansprüche

1. Anhänger (1) zur Beförderung und Ausbringung von Flüssigkeiten, nämlich Wirtschaftsdünger oder Klärschlamm, umfassend
• eine Vorrichtung zum Ausbringen der Flüssigkeit auf ein Feld,
• einen Tank (2) mit vorderer Stirnwand (3), hinterer Stirnwand (4) und einer die beiden Stirnwände (3, 4) verbindenden Mantelfläche (5),
• eine im Tank (2) angeordnete Trennwand (12) zur Unterteilung des Tanks (2) in ein vorderes Tankvolumen (13) und ein hinteres Tankvolumen (14),
• und zumindest eine Durchflussöffnung (15) in der Trennwand (12) für einen freien Austausch der Flüssigkeit zwischen den beiden Tankvolumen (13, 14),
**dadurch gekennzeichnet, dass**
am Umfang der Durchflussöffnung (15) eine Befestigungsanordnung (16) zum nachrüstbaren Befestigen eines die Durchflussöffnung (15) verschließenden Deckels (101) ausgebildet ist.

2. Anhänger nach Anspruch 1,
• wobei die Befestigungsanordnung (16) mehrere, am Umfang der Durchflussöffnung (15) verteilte Schraubenlöcher (17), vorzugsweise mit Innengewinde oder aufgeschweißten Muttern, umfasst
• und/oder wobei die Befestigungsanordnung (16) mehrere, am Umfang der Durchflussöffnung verteilte Gewindebolzen umfasst.

3. Anhänger nach einem der vorhergehenden Ansprüche, wobei die einzelne Durchflussöffnung (15) eine Größe von zumindest 3%, vorzugsweise zumindest 5%, besonders vorzugsweise zumindest 10%, der Tankquerschnittsfläche aufweist.

4. Anhänger nach einem der vorhergehenden Ansprüche, wobei der Tank (2) ein Mannloch (11) zum Einsteigen in den Tank (2) aufweist, wobei die Größe der größten Durchflussöffnung (15) und die Größe des Mannloches (11) aneinander angepasst sind, sodass der einteilige Deckel (101), insbesondere als steife Platte, zum Verschließen der gesamten Durchflussöffnung (15) durch das Mannloch passt.

5. Anhänger nach einem der vorhergehenden Ansprüche, wobei zumindest eine Durchflussöffnung (15) in der unteren Hälfte der Trennwand (12) angeordnet ist.

6. Anhänger nach einem der vorhergehenden Ansprüche, wobei zumindest eine Durchflussöffnung (15) in der oberen Hälfte der Trennwand (12) angeordnet ist.

7. Anhänger nach einem der vorhergehenden Ansprüche, wobei im vorderen und im hinteren Tankvolumen (13, 14) jeweils zumindest eine Flüssigkeitsentnahmeöffnung zur selektiven Entnahme der Flüssigkeit aus dem jeweiligen Tankvolumen (13, 14) ausgebildet ist.

8. Anordnung (100) umfassend einen Anhänger (1) nach einem der Ansprüche 1 bis 6 und einen Deckel (101), ausgebildet zum Befestigen an der Befestigungsanordnung (16) zum Verschließen der Durchflussöffnung (15).

9. Verfahren zum Nachrüsten eines Anhängers (1) nach einem der Ansprüche 1 bis 6, umfassend die folgenden Schritte: Einbringen eines Deckels (101), insbesondere durch ein Mannloch (11), in den Tank (2), und Befestigen des Deckels (101) an der Befestigungsanordnung (16) zum Verschließen der Durchflussöffnung (15).

## Claims

1. A trailer (1) for transporting and distributing liquids, namely farm fertiliser or sewage sludge, comprising
- a device for distributing the liquid onto a field,
- a tank (2) with a front end wall (3), a rear end wall (4) and a casing surface (5) connecting the two end walls (3, 4)
- a dividing wall (12) arranged in the tank (2) for dividing the tank (2) into a front tank volume (13) and a rear tank volume (14),
- and at least one throughflow opening (15) in the dividing wall (12) for a free exchange of the liquid between the two tank volumes (13, 14),
- **characterised in that** a fixing arrangement (16) is formed on the circumference of the throughflow opening (15) for the retrofittable fixing of a cover (101) closing the throughflow opening (15).

2. The trailer according to claim 1,
- wherein the fixing arrangement (16) comprises multiple screw holes (17) distributed around the circumference of the throughflow opening (15), preferably with internal threads or welded-on nuts
- and/or wherein the fixing arrangement (16) comprises multiple threaded bolts distributed around the circumference of the throughflow opening.

3. The trailer according to one of the preceding claims, wherein the individual throughflow opening (15) comprises a size of at least 3%, preferably at least 5%, particularly preferably at least 10%, of the tank cross-sectional area.

4. The trailer according to one of the preceding claims, wherein the tank (2) comprises a manhole (11) for entering the tank (2), wherein the size of the largest throughflow opening (15) and the size of the manhole (11) are adapted to each other, so that the one-piece cover (101), in particular as a rigid plate, fits through the manhole to close the entire throughflow opening (15).

5. The trailer according to one of the preceding claims, wherein at least one throughflow opening (15) is arranged in the lower half of the dividing wall (12).

6. The trailer according to one of the preceding claims, wherein at least one throughflow opening (15) is arranged in the upper half of the dividing wall (12).

7. The trailer according to one of the preceding claims, wherein in the front and in the rear tank volume (13, 14) respectively at least one liquid removal opening is formed for selective removing of the liquid from the respective tank volume (13, 14).

8. The arrangement (100) comprising a trailer (1) according to one of claims 1 to 6 and a cover (101) formed for fixing to the fixing arrangement (16) for closing the throughflow opening (15).

9. A method for retrofitting a trailer (1) according to one of claims 1 to 6, comprising the following steps: inserting a cover (101), in particular through a manhole (11), into the tank (2), and fixing the cover (101) to the fixing arrangement (16) for closing the throughflow opening (15).

## Revendications

1. Remorque (1) destinée au transport et l'épandage de liquides, à savoir des effluents d'élevage ou boues d'épuration, comprenant
- un dispositif pour l'épandage du liquide sur un champ,
- un réservoir (2) avec une paroi frontale (3) avant, une paroi frontale (4) arrière et une surface enveloppe (5) reliant les deux parois frontales (3, 4),
- une paroi de séparation (12) agencée dans le réservoir (2) pour la division du réservoir (2) en un volume de réservoir (13) avant et en un volume de réservoir (14) arrière,
- et au moins une ouverture de passage (15) dans la paroi de séparation (12) pour un échange libre du liquide entre les deux volumes de réservoir (13, 14),
**caractérisée en ce que**
un ensemble de fixation (16) est réalisé au niveau de la périphérie de l'ouverture de passage (15) pour la fixation modernisable d'un couvercle (101) fermant l'ouverture de passage (15).

2. Remorque selon la revendication 1,
- dans laquelle l'ensemble de fixation (16) comprend plusieurs trous de vis (17) répartis au niveau de la périphérie de l'ouverture de passage (15), de préférence avec un filet intérieur ou des écrous soudés,
- et/ou dans laquelle l'ensemble de fixation (16) comprend plusieurs boulons filetés répartis au niveau de la périphérie de l'ouverture de passage.

3. Remorque selon l'une quelconque des revendications précédentes, dans laquelle l'ouverture de passage (15) individuelle présente une grandeur d'au moins 3 %, de préférence d'au moins 5 %, de manière particulièrement préférée d'au moins 10 %, de l'aire de section de réservoir.

4. Remorque selon l'une quelconque des revendications précédentes, dans laquelle le réservoir (2) présente un trou d'homme (11) pour la montée dans le réservoir (2), dans laquelle la grandeur de l'ouverture de passage (15) la plus grande et la grandeur du trou d'homme (11) sont adaptées l'une à l'autre de sorte que le couvercle (101) d'un seul tenant, en particulier en tant que plaque rigide, traverse le trou d'homme pour la fermeture de l'ouverture de passage (15) entière.

5. Remorque selon l'une quelconque des revendications précédentes, dans laquelle au moins une ouverture de passage (15) est agencée dans la moitié inférieure de la paroi de séparation (12).

6. Remorque selon l'une quelconque des revendications précédentes, dans laquelle au moins une ouverture de passage (15) est agencée dans la moitié supérieure de la paroi de séparation (12).

7. Remorque selon l'une quelconque des revendications précédentes, dans laquelle respectivement au moins une ouverture de prélèvement de liquide pour le prélèvement sélectif du liquide du volume de réservoir (13, 14) respectif est réalisée dans le volume de réservoir avant et dans le volume de réservoir arrière (13, 14).

8. Ensemble (100) comprenant une remorque selon l'une quelconque des revendications 1 à 6 et un couvercle (101), réalisé pour la fixation à l'ensemble de fixation (16) pour la fermeture de l'ouverture de passage (15).

9. Procédé de modernisation d'une remorque (1) selon l'une quelconque des revendications 1 à 6, comprenant les étapes suivantes : l'introduction d'un couvercle (101), en particulier par un trou d'homme (11), dans le réservoir (2), et la fixation du couvercle (101) à l'ensemble de fixation (16) pour la fermeture de l'ouverture de passage (15).
